# EUROPÄISCHE PATENTSCHRIFT

(11) **EP 1 138 874 B1**
(45) Veröffentlichungstag und Bekanntmachung des Hinweises auf die Patenterteilung: **07.05.2003**
(21) Anmeldenummer: 01116065.2
(22) Anmeldetag: 23.03.1998
(51) Int. Cl.: F01B 3/00, F04B 1/12, F16C 11/06

(54) **Verfahren zum Herstellen einer Kugelgelenkverbindung**
Process for manufacturing a ball joint
Procédé de fabrication d'une articulation à rotule

(30) Priorität: 26.03.1997 DE 19712838; 22.04.1997 DE 19716880
(43) Veröffentlichungstag der Anmeldung: 04.10.2001
(62) Teilanmeldung aus: 98917056.8
(73) Patentinhaber: BRUENINGHAUS HYDROMATIK GMBH, 89275 Elchingen (DE)
(72) Erfinder: Hühn, Bernd, 89275 Elchingen (DE); Lotter, Manfred, 89231 Neu-Ulm (DE); Kunze, Thomas, 89297 Roggenburg (DE); Stölzer, Rainer, 89291 Neu-Ulm (DE)
(74) Vertreter: Körfer, Thomas, Dipl.-Phys.

(56) Entgegenhaltungen:
- DE-A- 2 132 252
- DE-A- 2 643 780
- DE-A- 4 433 762
- FR-A- 2 634 839
- US-A- 3 953 139

## Beschreibung

Die Erfindung betrifft ein Verfahren zum Herstellen einer Kugelgelenkverbindung zwischen einem Gleitschuh und einem Zylinderkolben einer Kolbenmaschine, insbesondere einer Axialkolbenmaschine.

Bei Axialkolbenmaschinen in Schrägscheibenbauweise stützen sich die in Zylinderbohrungen bewegbaren Zylinderkolben über jeweils einen Gleitschuh an der Gleitfläche einer Schrägscheibe ab. Dabei ist es üblich, die Zylinderkolben mit den Gleitschuhen mittels einer Kugelgelenkverbindung zu verbinden, um in jeder Schrägstellung der Schrägscheibe eine flächige Anlage der Gleitsohle der Gleitschuhe an der Gleitfläche der Schrägscheibe zu gewährleisten.

Bei der Herstellung der Kugelgelenkverbindung ist es weitgehend üblich, den an dem Gleitschuh oder dem Zylinderkolben angeformten Kugelkopf in eine abgerundete Ausnehmung des entsprechenden Gegenstücks, also des Zylinderkolbens bzw. Gleitschuhs, einzusetzen. Die Ausnehmung ist dabei nur in einem Raumwinkelbereich von etwa 180° als Halb-Hohlkugel abgerundet. An diesem halbkugelförmigen Bereich der Ausnehmung schließt sich ein hohlzylinderförmiger Bereich an, der an einer Öffnung ausmündet. Der Öffnungsdurchmesser an der Öffnung der Ausnehmung entspricht dem Durchmesser im Bereich der Äquatorebene des halb-hohlkugelförmigen Bereichs der Ausnehmung. Beim Zusammenfügen des Gleitschuhs und des Zylinderkolbens wird der an einem der beiden Teile angeformte Kugelkopf in die Ausnehmung eingeführt und in der Ausnehmung formschlüssig verankert. Dies ist notwendig, damit über die Kugelgelenkverbindung während des Saughubs der Kolbenmaschine eine entsprechende Zugkraft übertragbar ist.

Bei einem gängigen Verfahren zur Verbindung des Kugelkopfs mit der korrespondierenden Ausnehmung wird nach Einführen des sphärischen Kugelkopfs der den Kugelkopf im Bereich der Öffnung der Ausnehmung umgebende Randbereich, z. B. mittels Walzen, umgebördelt. Ein solches Verfahren geht beispielsweise aus der DE-OS 1 776 027 hervor. Aus der DE-AS 21 32 252 ist es dagegen bekannt, daß zur Verankerung des Kugelkopfes des Gleitschuhs in der Ausnehmung des Zylinderkolbens ein Sperring eingesetzt wird, der sich gegen eine Innenfläche der Ausnehmung abstützt. Die beiden vorstehend genannten Verfahren sind relativ aufwendig und in der Serienfertigung mit relativ hohen Fertigungs- und Montagekosten verbunden.

Die plastische Verformung des Zylinderkolbens in dem die kalottenförmige Ausnehmung umgebenden Randbereich ist insofern mit Nachteilen behaftet, als der Kolben z. B. durch Nitrieren und einer Wärmebehandlung einer speziellen Härtung unterworfen wird, um die Verschleißfestigkeit zu verbessern. Diese Härtung steht jedoch einer nachfolgenden plastischen Verformung entgegen, so daß der die kalottenförmige Ausnehmung umgebende Bereich von der Wärmebehandlung ausgespart werden muß, was einen erheblichen Mehraufwand bedeutet. Ferner besteht das Problem, daß die zur Verformung des in der Regel aus Stahl gefertigten Zylinderkolbens erforderliche hohe Preßkraft zu einer unerwünschten Mitverformung des zur Verbesserung der Gleiteigenschaften aus einer Kupfer- oder Bronzelegierung bestehenden Kugelkopfes des Gleitschuhs führt. In der Praxis ist es daher erforderlich, den Gleitschuh zweiteilig mit einem aus einer Kupfer- oder Bronzelegierung gefertigten Gleitteil und einer in dieses eingesetzten Stahlkugel auszubilden.

In jedem Fall ist für die Umbördelung ein zusätzlicher, aufwendiger Arbeitsschritt erforderlich. Das Einsetzen eines Sperrings zur Verriegelung des Kugelkopfes erhöht die Anzahl der für die Montage notwendigen Teile und hat sich aufgrund des hohen Montage- und Fertigungsaufwands in der Praxis nicht bewährt.

Aus der DE 42 14 765 A1 ist es bekannt, den Kugelkopf der Gleitschuhe mit einer bezüglich der Längsachse der Gleitschuhe abgewinkelten Abflachung zu versehen. Nach Einsetzen des Kugelkopfs in die Ausnehmung des Zylinderkolbens ist es möglich, den Kugelkopf in der Ausnehmung so zu verkanten, daß dieser aus der Ausnehmung nicht herausgezogen werden kann. Dieses Verfahren hat jedoch den Nachteil, daß die Grenzfläche zwischen dem Kugelkopf des Gleitschuhs und der Ausnehmung des Zylinderkolbens im Bereich der Kanten des Kugelkopfs einem erhöhten Verschleiß unterworfen ist. Ferner ist die Auflagefläche durch die Abflachung deutlich verringert. Des weiteren ist der Schwenkwinkel, welchen die Schrägscheibe gegenüber der Zylindertrommel einnehmen kann, erheblich begrenzt. Dieses Verfahren ist insbesondere bei Axialkolbenmaschinen mit in beiden Schwenkrichtungen verschwenkbaren Schrägscheiben nicht anwendbar.

Der Erfindung liegt daher die Aufgabe zugrunde, ein Verfahren zum Herstellen einer Kugelgelenkverbindung zwischen einem Gleitschuh und einem Zylinderkolben einer Kolbenmaschine anzugeben, welches eine rationelle und kostengünstige Serienfertigung ermöglicht.

Die Aufgabe wird durch die Merkmale des Anspruchs 1 gelöst.

Der Lösung liegt die Erkenntnis zugrunde, daß ein kostengünstiges Zusammenfügen des Kugelgelenks dadurch erreicht werden kann, daß der die Ausnehmung umgebende Randbereich und/oder der Kugelkopf vor dem Zusammenfügen thermisch verformt wird, der Kugelkopf in die Ausnehmung eingeführt wird und durch Temperaturangleichung des Kugelkopfs und des die Ausnehmung umgebenden Randbereichs die gewünschte hintergreifende Verbindung entsteht.

Der Anspruch 2 betrifft eine vorteilhafte Weiterbildung der Erfindung. Die thermische Verformung läßt sich mit einer elastischen Verformung kombinieren.

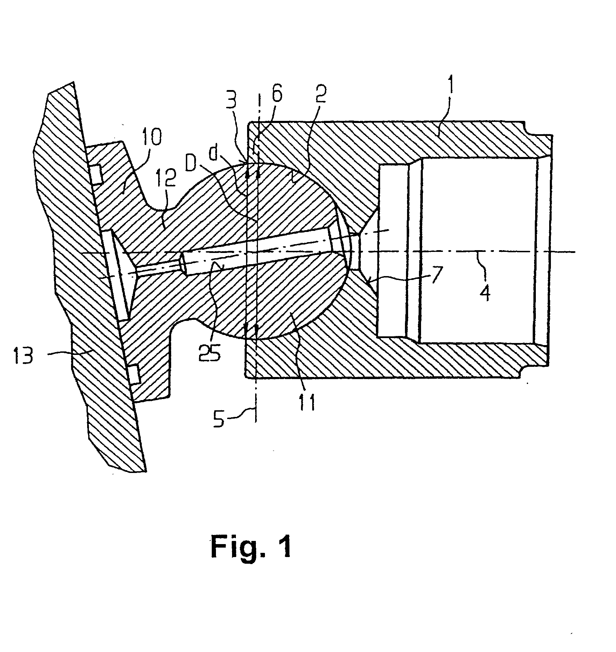

Nachfolgend wird ein Ausführungsbeispiel der Erfindung unter Bezugnahme auf die Zeichnung näher beschrieben. In der Zeichnung zeigt
- Fig. 1: eine fertige Kugelgelenkverbindung mit einem gleitschuhseitigen Kugelkopf, der in eine zylinderkolbenseitige Ausnehmung eingreift, entsprechend einem bevorzugten Ausführungsbeispiel.

Die Gelenkverbindung des bevorzugten Ausführungsbeispiels nach Fig. 1 ist nach folgendem Verfahren hergestellt.

Ein Zylinderkolben 1 ist in an sich bekannter Weise in einer Zylinderbohrung der Kolbenmaschine, die bei einer Axialkolbenmaschine in Schrägscheibenbauweise z. B. in einer rotierenden Zylindertrommel angeordnet ist, bewegbar. Der Zylinderkolben 1 weist an einem seiner Enden eine sphärische, kalottenförmige bzw. teilkugelförmige Ausnehmung 2 auf. Die kalottenförmige Ausnehmung 2 ist an der Stirnseite des Zylinderkolbens 1 an einer Öffnung 3 geöffnet. Erfindungswesentlich ist die Ausnehmung 2 dabei so hinterschnitten, daß die kalottenförmige Ausnehmung 2 einen Raumwinkelbereich von mehr als 180° umfaßt (α>180°). Anders ausgedrückt ist der Durchmesser d der Öffnung 3 kleiner Bemessen als der Durchmesser D der Ausnehmung 2 im Bereich einer sich senkrecht zu der Längsachse 4 erstreckenden Äquatorebene 5. Zwischen der Äquatorebene 5 und der Öffnung 3 weist die kalottenförmige Ausnehmung 2 einen elastisch verformbaren Randbereich 6 auf. Der Zylinderkolben 1 kann homogen aus einem elastischen, schwer verformbaren Material, insbesondere mittels einer Wärmebehandlung aus nitriertem Stahl gefertigt sein. Im Gegensatz zu dem aus dem Stand der Technik bekannten Umbördelungsverfahren kommt es bei dem erfindungsgemäßen Verfahren nicht auf die plastische Verformbarkeit des Randbereichs 6 an. Der Zylinderkolben 1 kann bei der Nitrierung daher einer homogen, gleichmäßigen Wärmebehandlung unterworfen werden, ohne daß der Randbereich 6 der Ausnehmung 2 von dieser Behandlung ausgenommen werden muß und ein dafür notwendiger Mehraufwand notwendig würde.

Die kalottenförmige Ausnehmung 2 ist an sich bekannter Weise über eine Längsbohrung 7 mit der nicht dargestellten Zylinderbohrung der Kolbenmaschine verbunden, um über eine in dem zugehörigen Gleitschuh 10 ebenfalls vorgesehene Längsbohrung 25 einen Druckmittelfluß zu der Gleitsohle des Gleitschuhs 10 zu ermöglichen und so eine Schmierwirkung und eine hydraulische Entlastung zu bewirken.

Der Gleitschuh 10 ist dabei über einen Kragenabschnitt 12 an dem Kugelkopf 11 angeformt. Der Kugelkopf 11 ist Form einer Teilkugel sphärisch ausgeformt, wobei der Durchmesser des Kugelkopfes 11, abgesehen von einem geringfügigen Lagerspiel, mit dem äquatorialen Durchmesser D der kalottenförmigen Ausnehmung 2 übereinstimmt. Der Gleitschuh 10 liegt an einer Schrägscheibe 13 der Axialkolbenmaschine an.

Vor dem Einführen des Kugelkopfes 11 in die kalottenförmige Ausnehmung 2 des Zylinderkolbens 1 wird der Zylinderkolben 1 erhitzt. Dabei kann eine Erhitzung im Bereich des die kalottenförmige Ausnehmung 2 umgebenden Randbereichs 6 ausreichen. Der Zylinderkolben 1 kann jedoch auch homogen, gleichmäßig erhitzt werden. Alternativ oder zusätzlich wird der Kugelkopf 11 abgekühlt. Dies kann z.B. durch Eintauchen in ein geeignetes Kühlmittel, z.B. flüssigen Stickstoff geschehen. Während sich der Randbereich 6 der kalottenförmigen Ausnehmung 2 durch die Erhitzung aufweitet und sich daher der Öffnungsdurchmesser d erweitert, zieht sich der Kugelkopf 11 bei einer Abkühlung entsprechend zusammen, so daß sich der Kugelkopf-Durchmesser entsprechend verringert. Auf diese Weise ist es möglich den Kugelkopf 11 nahezu widerstandslos in die kalottenförmige Ausnehmung 2 einzuführen. Nachdem sich die Temperaturen des Randbereichs 6 der kalottenförmigen Ausnehmung 2 des Kugelkopfs 11 einander wieder angeglichen haben, ist der Kugelkopf 11 in der kalottenförmigen Ausnehmung 2 verankert, indem der Randbereich 6 den Kugelkopf 11 hintergreift.

Selbstverständlich kann das Verfahren in gleicher Weise auch dann zur Anwendung kommen, wenn der Kugelkopf 11 an den Zylinderkolben 1 und die sphärische, kalottenförmige Ausnehmung 2 an dem Gleitschuh 10 ausgebildet sind. Das erfindungsgemäße Verfahren ist insbesondere dann bevorzugt anwendbar, wenn der Zylinderkolben 1 aus Stahl und der Gleitschuh 10 aus einer Buntmetall-Legierung besteht.

Ein Vorteil der thermischen Behandlung des Randbereichs 6 der sphärischen, kalottenförmigen Ausnehmung 2 und/oder des Kugelkopfes 11 ist insbesondere die Unabhängigkeit von der Wandstärke des Randbereichs 6. Der Wandstärke des Randbereichs 6 kommt hingegen bei einer elastischen Verformung eine nicht unwesentliche Bedeutung zu. Ferner werden eine Gefügeveränderung, eine Materialverformung oder ein Aufweitungsverlust durch eine plastische Teilverformung, wie sie bei dem Verfahren mittels elastischer Verformung grundsätzlich denkbar sind, vermieden.

Die vorliegende Erfindung ist nicht auf das dargestellte Ausführungsbeispiel begrenzt. Es sind eine Vielzahl weiterer Möglichkeiten zur entweder elastischen Verformung des die kalottenförmige Ausnehmung 2 umgebenden Randbereichs 6 oder zur plastischen Verformung des Kugelkopfes 11 denkbar.

## Patentansprüche

1. Verfahren zum Herstellen einer Kugelgelenkverbindung zwischen einem Gleitschuh (10) und einem Zylinderkolben (1) einer Kolbenmaschine mit folgenden Verfahrensschritten:
- Formen einer sphärischen, kalottenförmigen Ausnehmung (2) an dem Zylinderkolben (1) bzw. dem Gleitschuh (10), wobei die Ausnehmung (2) so hinterschnitten ist, daß die kalottenförmige Ausnehmung (2) einen Raumwinkelbereich von mehr als 180° umfaßt und oder Durchmesser (D) im Bereich der Äquatorebene (5) größer ist als der Öffnungsdurchmesser (d) der Ausnehmung (2),
- Formen eines sphärischen Kugelkopfes (11) an dem Gleitschuh (10) bzw. dem Zylinderkolben (1), und
- Erhitzen zumindest des die kalottenförmige Ausnehmung (2) umgebenden Randbereichs (6) und/oder Kühlen des Kugelkopfes (11),
- Einführen des Kugelkopfes (11) in die kalottenförmige Ausnehmung (2), wobei der die kalottenförmige Ausnehmung (2) umgebende Randbereich (6) nach dem Einführen des Kugelkopfes (11) den Kugelkopf (11) hintergreift, sobald sich die Temperaturen des Kugelkopfes (11) und des die kalottenförmige Ausnehmung (2) umgebenden Randbereichs (6) einander angeglichen haben.

2. Verfahren nach Anspruch 1,
**dadurch gekennzeichnet,**
**daß** der die kalottenförmige Ausnehmung (2) umgebende Randbereich (6) zusätzlich beim Einführen des Kugelkopfes (11) elastisch verformt wird.

## Claims

1. Method of manufacturing a ball-joint connection between a sliding block (10) and a cylinder piston (1) of a piston machine, the said method comprising the following steps:
- the forming of a spherical, cap-shaped recess (2) on the cylinder piston (1) or on the sliding block (10), the said recess (2) being undercut in such a way that the cap-shaped recess (2) encompasses a solid-angle region of more than 180° and the diameter (D) in the region of the equatorial plane (5) is greater than the diameter (d) of the opening of the recess (2),
- the forming of a spherical ball head (11) on the sliding block (10) or on the cylinder piston (1), and
- the heating-up of at least the rim region (6) surrounding the cap-shaped recess (2) and/or the cooling of the ball head (11),
- the introduction of the ball head (11) into the cap-shaped recess (2), the rim region (6) surrounding the said cap-shaped recess (2) gripping behind the ball head (11), after the introduction of the latter, as soon as the temperatures of the said ball head (11) and of the rim region (6) surrounding the cap-shaped recess (2) have been assimilated to one another.

2. Method according to claim 1,
**characterised in that,**
the rim region (6) surrounding the cap-shaped recess (2) is additionally elastically deformed when the ball head (11) is introduced.

## Revendications

1. Procédé de réalisation d'une articulation à rotule entre un patin coulissant (10) et un piston de cylindre (1) d'un moteur à pistons, comprenant les étapes suivantes :
- on forme un évidement sphérique en forme de calotte (2) respectivement sur le piston de cylindre (1) ou sur le patin coulissant (10), l'évidement (2) étant en contre-dépouille de telle sorte que l'évidement en forme de calotte (2) présente un angle solide de plus de 180° et que le diamètre (D) dans la zone du plan équatorial (5) est supérieur au diamètre d'ouverture (d) de l'évidement (2),
- on forme une tête de rotule sphérique (11) respectivement sur le patin coulissant (10) ou sur le piston de cylindre (1), et
- on fait chauffer au moins la zone de bordure (6) entourant l'évidement en forme de calotte (2) et/ou en fait refroidir la tête de rotule (11),
- on introduit la tête de rotule (11) dans l'évidement en forme de calotte (2), et après introduction de la tête de rotule (11), la zone de bordure (6) entourant l'évidement en forme de calotte (2) engage par l'arrière la tête de rotule (11) dès que les températures de la tête de rotule (11) et de la zone de bordure (6) entourant l'évidement en forme de calotte (6) se sont égalisées.

2. Procédé selon la revendication 1, **caractérisé en ce que** lors de l'introduction de la tête de rotule (11), la zone de bordure (6) entourant l'évidement en forme de calotte (2) est en outre déformée élastiquement.
